# EUROPEAN PATENT APPLICATION

(11) **EP 0 768 516 A1**
(43) Date of publication of application: **16.04.1997**
(21) Application number: 95830438.8
(22) Date of filing: 16.10.1995
(51) Int. Cl.: G01D 5/26, G01D 5/353, G01B 11/16

(54) **Interferometer optical transducer and relative fabrication method**

(71) Applicant: EUROPEAN COMMUNITY, 2920 Luxembourg (LU)
(72) Inventor: Tatti, Marco, I-21016 Luino (IT); Lucia, Alfredo Carlo, I-21018 Osmate Lentate (IT); Galli, Maurizio, I-21014 Laveno Mombello (IT)
(74) Representative: Boggio, Luigi

(57) **Abstract**

An interferometer optical transducer presenting a parallelepiped supporting body (4) made of synthetic material; a first optical fiber (7) in turn presenting a first straight end portion (7a) embedded in the supporting body (4); and a second optical fiber (6) in turn presenting a second straight end portion (6a) embedded in the supporting body (4) and extending parallel to the first straight end portion (7a). The end surface (23) of a first (7) optical fiber lies substantially in a plane intersecting and perpendicular to the second (6) optical fiber, so that the second optical fiber (6) projects in relation to the first optical fiber (7).

## Description

The present invention relates to an interferometer optical transducer and relative fabrication method.

Interferometer measuring systems, e.g. Michelson, Fabry-Perot, Mach-Zehnder interferometers, are already known. In the Michelson system, a beam splitter is supplied with a light beam generated by a laser source, and supplies a first and second optical fiber presenting reflecting elements on the ends, and defining a first and second branch of the interferometer. The beams travel along the branches of the interferometer to the reflecting ends, and are reflected back to the beam splitter where they are recombined and form an optical interference signal which is picked up by a detecting element connected to the output of the beam splitter.

The first and second optical fibers present respective first and second end portions arranged parallel to each other with their free ends a given distance apart, and the end portions are normally secured to a supporting surface (test specimen or structure) whose deformation is to be determined.

Any deformation of the surface to which the fibers are secured produces a variation in the optical path along the interferometer branches, and hence a variation in the phase of the optical interference signal, which variation in phase may be correlated, using known physical-mathematical analysis methods, to the deformation of the test specimen.

The optical fibers of known systems are normally bonded stably to the surface of the test specimen, which method frequently results in a lack of parallelism between the end portions of the fibers. Moreover, on account of the small diameter and the fragile nature of the fibers, arranging and bonding them to the specimen is an extremely lengthy, painstaking process.

It is an object of the present invention to provide an interferometer transducer designed to overcome the aforementioned drawbacks relative to positioning of the optical fibers, and typically associated with known interferometer systems.

According to the present invention, there are provided an interferometer transducer as claimed in Claim 1, and a method of fabricating an interferometer transducer, as claimed in Claim 8.

The present invention will be described with reference to the accompanying drawings, in which:
Figure 1 shows a view in perspective of an interferometer transducer in accordance with the teachings of the present invention;
Figure 2 shows a view in perspective of a mold for producing the interferometer transducer in Figure 1;
Figure 3 shows one example of assembly of the interferometer transducer according to the present invention;
Figure 4 shows a schematic view of an interferometer sensor featuring the Figure 1 transducer.

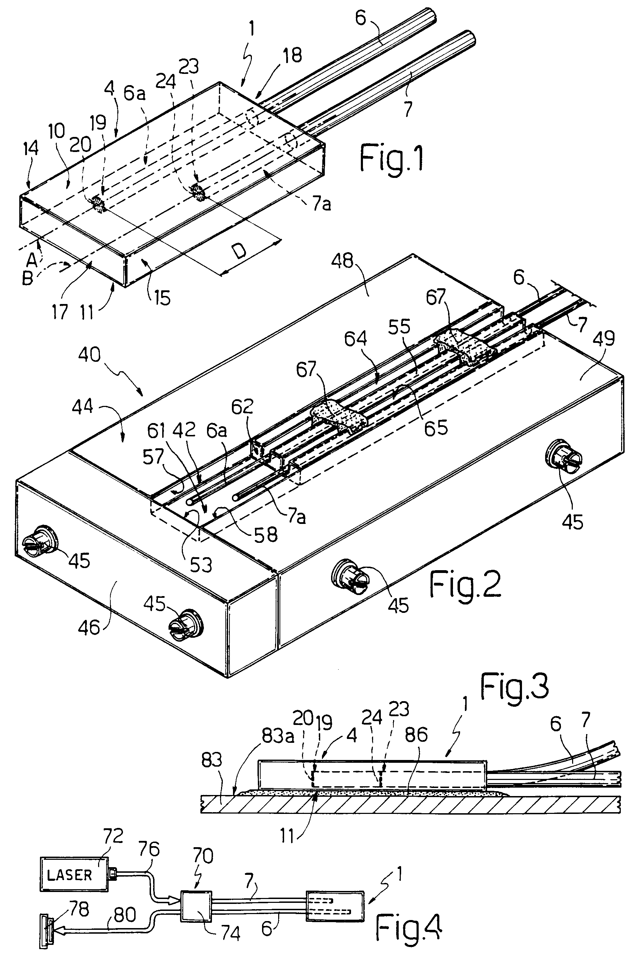

Number 1 in Figure 1 indicates an interferometer optical transducer for determining deformation and variations in temperature or pressure.

Transducer 1 comprises a prismatic supporting body 4 housing end portions 6a, 7a of a first and second optical fiber 6, 7, and made of mechanically strong material resistant to high temperature and industrial agents (corrosive products, oil, gas, etc.), e.g. synthetic resin, such as epoxy, phenol-formaldehyde, silicone resin, ceramic-based cement, or other materials.

Prismatic body 4 is defined by a pair of opposite rectangular surfaces 10, 11 (indicated, for the sake of convenience, as top and bottom surfaces), two elongated rectangular lateral surfaces 14, 15, a rectangular front surface 17, and a rectangular rear surface 18 from which optical fibers 6, 7 extend.

End portion 6a is embedded inside body 4, extends in a straight direction A parallel to surfaces 10 and 11 and close to (or contacting) bottom surface 11, and is defined at the front by a circular end surface 19 on which is deposited a flat layer 20 of reflecting material (e.g. aluminium, chromium, gold, zirconium, etc.). Similarly, end portion 7a is embedded inside body 4, extends in a straight direction B parallel to direction A and close to (or contacting) bottom surface 11, and is defined at the front by a circular end surface 23 on which is deposited a flat layer 24 of reflecting material (e.g. aluminium, chromium, gold, zirconium, etc.).

End surface 23 of optical fiber 7 substantially lies in a plane intersecting and perpendicular to optical fiber 6, which therefore projects in relation to optical fiber 7 by a distance D measured between surfaces 19 and 23 in direction A, B. More specifically, surface 19 is closer than surface 23 to the front surface 17 of body 4.

The method and the mold used for producing optical transducer 1 will now be described with reference to Figure 2.

Number 40 in Figure 2 indicates a mold for producing transducer 1. Mold 40 is parallelepiped, presents a parallelepiped seat 42 in its top wall 44, and is made of material, e.g. polytetrafluoroethylene (PTFE), which is inert in relation to the synthetic resin of body 4.

Mold 40 comprises a number of parallelepiped portions connected by screws 45. More specifically, mold 40 comprises a parallelepiped front portion 46; two parallelepiped lateral portions 48, 49 with rectangular end surfaces (not shown) adjacent to a rectangular surface 53 of front portion 46; and a parallelepiped intermediate portion 55 located between, and adjacent to facing surfaces 57, 58 of, portions 48, 49.

Parallelepiped seat 42 is defined by a rectangular bottom surface 61; the rectangular rear surface 62 of parallelepiped portion 55; a rectangular portion of rectangular surface 53 opposite surface 62; and respective rectangular portions of surfaces 57, 58.

Intermediate portion 55 presents two straight parallel grooves 64, 65 extending parallel to surfaces 57, 58 and perpendicularly to surface 62 along the full length of intermediate portion 55, and terminating inside seat 42.

According to the method of the present invention, first optical fiber 6 is placed inside groove 64 with end portion 6a inside seat 42; and second optical fiber 7 is placed inside groove 65 with end portion 7a inside seat 42. Inside seat 42, portions 6a, 7a extend parallel to each other and close to bottom surface 61. A first optical fiber, e.g. fiber 6, is then fixed stably to mold 40, e.g. by pouring a small amount of easily removable adhesive 67 (e.g. liquid silicone) inside groove 64, to prevent fiber 6 from sliding axially along groove 64, and to stably position the metalized end surface 19 of fiber 6 inside seat 42. At this point, fiber 7 is moved axially along groove 65 to form distance D between the metalized end surface 23 of fiber 7 and end surface 19 of fiber 6; once fibers 6 and 7 are positioned in relation to each other, fiber 7 is fixed stably to mold 40 by pouring adhesive 67 into groove 65; and seat 42 is subsequently filled with liquid synthetic resin to embed end portions 6a, 7a of fibers 6, 7.

The resin is then cured accordingly (e.g. by placing mold 40 inside an autoclave or oven) and sets to form prismatic body 4.

Prismatic body 4 is extracted by dismantling mold 40, i.e. removing portions 46, 48, 49 and 55.

Mold 40 is dismantled to enable troublefree removal of body 4, and may be taken apart by first removing portion 46 to free surface 17 of body 4, and then removing lateral portions 48, 49 to free lateral surfaces 14, 15. Finally, body 4 (by now adhering only to surfaces 61, 62) may be detached, e.g. by lifting it, from intermediate portion 55.

Transducer 1 may be used for making interferometer measurements of deformation, temperature and/or pressure, for which purpose, it may be used in interferometer sensors of the type shown in Figure 4.

Number 70 in Figure 4 indicates a Michelson interferometer (sensor) comprising a laser source 72; a beam splitter 74 supplied by an optical fiber 76 with the light beam generated by source 72; and a photodetecting element 78 communicating with beam splitter 74 via an optical fiber 80. Interferometer 70 also comprises transducer 1, the optical fibers 6, 7 of which are connected to respective outputs of beam splitter 74 and define respective branches of the interferometer.

Transducer 1 (Figure 3) is conveniently placed on the substantially flat surface 83a of the test specimen or structure 83, with bottom surface 11 parallel to surface 83a, and is fixed stably to surface 83a, for example, by means of adhesive 86 between surface 83a and bottom surface 11.

The coherent monochromatic beam generated by laser source 72 is transmitted along fiber 76 and divided equally between fibers 6 and 7 by beam splitter 74; the beams so formed travel along optical fibers 6, 7 to reflecting end surfaces 19, 23, and are reflected back to beam splitter 74 where they are recombined to form an optical interference signal; and the optical interference signal is divided by beam splitter 74 so that a first portion is sent back to laser 72, and a second portion is sent to photodetecting element 78 via optical fiber 80.

Transducer 1 is capable of detecting any physical quantity capable of producing a variation in the optical path along the branches (optical fibers 6, 7) of the interferometer.

More specifically, when stress is applied to the test specimen or structure 83, this, and consequently prismatic body 4 integral with it, is deformed, and the deformation of prismatic body 4 produces a deformation of straight portions 6a, 7a of optical fibers 6, 7. Though subjected to the same deformation, portions 6a, 7a differ in length (distance D between end portions 19 and 23), so that the variation in the optical path of fiber 6 differs from that of fiber 7. The different variation in the optical paths of the two branches of the interferometer produces a corresponding different variation in phase in the two fibers, so that the resulting optical interference signal presents a phase shift related to the variation in the optical paths of the two branches. Using known physical-mathematical analysis methods, the signal detected by photodetecting element 78 may therefore be analyzed to determine the deformation value of surface 83a.

Interferometer 70 presents a high degree of sensitivity, and is capable of detecting phase variations produced by perturbations on transducer 1 comparable with the order of magnitude of the wavelength of the laser beam used.

Prismatic body 4 therefore provides for ensuring perfect parallelism of portions 6a, 7a of optical fibers 6, 7, which, together with body 4, constitute transducer 1, and also for safeguarding portions 6a, 7a and reflecting material 20, 24 against damage by external agents. Moreover, transducer 1 is cheap and easy to produce, is compact, lightweight and highly reliable, and, being optical, is insensitive to electromagnetic disturbance and may therefore be used to advantage in industrial environments involving a high degree of interference.

Clearly, changes may be made to the interferometer transducer as described and illustrated herein without, however, departing from the scope of the present invention. For example, transducer 1 may comprise one optical fiber with one straight end portion embedded in body 4.

## Claims

1. An interferometer optical transducer, characterized in that it comprises:
- a supporting body (4); and
- at least one optical fiber (6, 7) in turn comprising a straight end portion (6a, 7a) embedded in said supporting body (4);
said straight end portion (6a, 7a) presenting an end surface (19, 23) inside said supporting body (4) and in turn presenting reflecting means (20, 24).

2. A transducer as claimed in Claim 1, characterized in that it comprises:
- a first optical fiber (7) in turn comprising a first straight end portion (7a) embedded in said supporting body (4); and
- a second optical fiber (6) in turn comprising a second straight end portion (6a) embedded in said supporting body (4) and extending parallel to said first straight end portion (7a);
the end surface (23) of a first (7) optical fiber lying substantially in a plane intersecting and perpendicular to the second optical fiber (6), so that said second optical fiber (6) projects a given distance (D) in relation to said first optical fiber (7).

3. A transducer as claimed in Claim 1 or 2, characterized in that said supporting body (4) presents at least a flat bottom surface (11).

4. A transducer as claimed in Claim 3, characterized in that said straight end portion (6a, 7a) extends close to and parallel to said flat bottom surface (11).

5. A transducer as claimed in any one of the foregoing Claims, characterized in that said supporting body (4) is parallelepiped.

6. A transducer as claimed in any one of the foregoing Claims, characterized in that said supporting body (4) is made of synthetic material.

7. A transducer as claimed in any one of the foregoing Claims, characterized in that said reflecting means (20, 24) comprise a reflecting layer (20, 24) deposited on said end surface (19, 23).

8. A method of fabricating an interferometer optical transducer, characterized in that it comprises the steps of:
- preparing a mold (40) presenting at least a prismatic seat (42);
- placing at least one optical fiber (6, 7) in said mold (40), with its straight end portion (6a, 7a) extending inside said prismatic seat (42);
- fixing said optical fiber (6, 7) stably to said mold (40);
- filling said prismatic seat (42) with liquid resin to embed said straight portion (6a, 7a) of said optical fiber (6, 7);
- setting said resin;
- extracting the set resin from the mold (40); said set resin forming a supporting body (4) stably housing said straight end portion (6a, 7a).

9. A method of fabricating an interferometer optical transducer, as claimed in Claim 8, characterized in that it comprises the steps of:
- preparing a mold (40) presenting at least a prismatic seat (42);
- placing a first optical fiber (6) in said mold (40), with its straight end portion (6a) extending inside said prismatic seat (42);
- placing a second optical fiber (7) in said mold (40), with its straight end portion (7a) extending inside said prismatic seat (42) and parallel to the straight end portion (6a) of said first optical fiber (6);
- adjusting the distance (D) between the ends (19, 23) of said first (6) and second (7) optical fibers;
- fixing said first (6) and second (7) optical fibers stably to said mold (40);
- filling said prismatic seat (42) with liquid resin to embed said straight portions (6a, 7a) of said first (6) and second (7) optical fibers;
- setting said resin;
- extracting the set resin from the mold (40); said set resin forming a supporting body (4) stably housing said straight end portions (6a, 7a) extending parallel to each other.

10. A method as claimed in Claim 8 or 9, characterized in that said step of extracting said set resin from the mold (40) comprises the step of dismantling the mold (40) into a number of portions (46, 48, 49, 55), each defining at least one surface (53, 57, 58, 61, 62) defining said prismatic seat (42).
